# EUROPÄISCHE PATENTSCHRIFT

(11) **EP 1 475 685 B1**
(45) Veröffentlichungstag und Bekanntmachung des Hinweises auf die Patenterteilung: **12.11.2014**
(21) Anmeldenummer: 04009776.8
(22) Anmeldetag: 24.04.2004
(51) Int. Cl.: G05D 23/02, G01K 5/44

(54) **Thermostatisches Arbeitselement**
Thermostatic actuator
Actionneur thermostatique

(30) Priorität: 09.05.2003 DE 10322358
(43) Veröffentlichungstag der Anmeldung: 10.11.2004
(60) Teilanmeldung: 10183641.9
(73) Patentinhaber: Behr Thermot-tronik GmbH, 70806 Kornwestheim (DE)
(72) Erfinder: Willers, Eike, 70469 Stuttgart (DE); Buschatz, Immanuel, 72669 Unterensingen (DE)
(74) Vertreter: Grauel, Andreas

(56) Entgegenhaltungen:
- FR-A- 1 281 056
- GB-A- 507 501
- GB-A- 887 317
- US-A- 4 389 629

## Beschreibung

Die Erfindung betrifft ein thermostatisches Arbeitselement mit einem Gehäuse, das einen mit einem Zusatzstoff vermischten Dehnstoff enthält, dessen Volumen temperaturabhängig ist und der als Mittel zum Austreiben eines Arbeitskolbens aus dem Gehäuse dient.

Bei thermostatischen Arbeitselementen wird als Dehnstoff üblicherweise eine Wachsmischung eingesetzt, da diese günstige Eigenschaften bietet, wenn sich aufgrund einer Temperaturänderung ihr Aggregatzustand ändert. Es wird einerseits eine nahezu lineare Kennlinie erhalten, während andererseits relativ große Stellkräfte zur Verfügung gestellt werden. Ein Problem dieser thermostatischen Arbeitselemente ist, dass sie nur relativ träge auf Temperaturänderungen reagieren, d.h. relativ lange Ansprechzeiten aufweisen. Es hat schon vielfältige Versuche gegeben, die Ansprechzeit zu verbessern, die aber nicht allzu erfolgreich waren. Es ist bekannt, dem Dehnstoff pulverförmige Materialien wie Metalloxide oder Metalle, beispielsweise Aluminium oder Kupfer zuzugeben, um die Wärmeleitfähigkeit und damit die Ansprechzeit zu verbessern. Das Zugeben dieser Stoffe führt zwar zu einer gewissen Verbesserung der Ansprechzeit, jedoch ist diese Verbesserung üblicherweise nicht von anhaltender Dauer. Die Zusatzstoffe und der Dehnstoff entmischen sich möglicherweise nach relativ kurzer Gebrauchszeit, so dass danach keine Verbesserung der Ansprechzeit mehr gegeben ist.

Ein thermostatisches Arbeitselement ist beispielsweise aus der GB 507 501 bekannt. Das thermostatische Arbeitselement weist ein Gehäuse auf, welches einen Dehnstoff enthält. Dem Dehnstoff ist ein fein verteilter Feststoff zugegeben, welcher ein guter Wärmeleiter ist, beispielsweise Graphit.

Der Erfindung liegt die Aufgabe zugrunde, die Ansprechzeit eines thermostatischen Arbeitselementes der eingangs genannten Art zu verbessern und für eine möglichst lange Gebrauchsdauer aufrecht zu erhalten.

Diese Aufgabe wird dadurch gelöst, dass dem Dehnstoff expandiertes Graphit zugegeben ist.

Expandiertes Graphit hat eine sehr hohe Wärmeleitfähigkeit, so dass die Ansprechzeit wesentlich verbessert wird. Darüber hinaus hat expandiertes Graphit eine Dichte, die der Dichte eines Dehnstoffes, insbesondere eine Wachsmischung, wesentlich ähnlicher ist als die üblicherweise verwendeten Metalle. Dies führt dazu, dass die Gefahr einer Entmischung wesentlich geringer ist. Die Ansprechzeit bleibt deshalb für eine Vielzahl von Zyklen praktisch unverändert auf dem verringerten Wert.

Expandiertes Graphit hat, wie andere Schaumstoffe auch, elastische Eigenschaften, so dass es bisher im wesentlichen als Dichtungsmaterial oder auch als Beschichtungsmaterial verwendet worden ist. Es hat sich gezeigt, dass bei einer sorgfältigen Vermischung des Dehnstoffes mit dem expandierten Graphit der Einfluss der Elastizität des expandierten Graphits weitgehend ausschließen lässt, so dass das thermostatische Arbeitselement weiterhin weitgehend eine Stellbewegung mit linearer Kennlinie durchführt.

Bei einer ersten Ausführungsform sind dem Dehnstoff expandierte Graphitflocken zugegeben. Dabei genügt für eine Verbesserung der Ansprechzeit oder Reaktionszeit bereits ein Gewichtsanteil von 25%. Bevorzugt wird ein Verarbeiten von Dehnstoff und Graphitflocken durchgeführt, wenn der Dehnstoff eine Temperatur von etwa 30° bis etwa 40° unter seinem Schmelzpunkt aufweist. Der Dehnstoff "verklebt" das expandierte Graphit und dämpft die Elastizität des expandierten Graphits. Vor oder nach dem Vermischen wird eine Erwärmung auf eine oberhalb der Schmelztemperatur des Dehnstoffs liegende Temperatur vorgenommen, so dass das expandierte Graphit den Dehnstoff aufsaugt.

Bei einer anderen Ausführungsform wird vorgesehen, dass dem Dehnstoff Pulver aus expandiertem Graphit zugegeben wird. In diesem Fall wird eine entscheidende Verbesserung der Ansprechzeit erreicht, wenn der Gewichtsanteil des Pulvers etwa 50% beträgt. Das ist zwar ein höherer Gewichtsanteil als er für expandierte Graphitflocken benötigt wird, jedoch ist das Vermischen mit dem Dehnstoff einfacher. Ein Verarbeiten erfolgt bevorzugt, wenn der Dehnstoff eine Temperatur aufweist, die nur geringfügig unter seinem Schmelzpunkt liegt, beispielsweise nur 2° bis 5°. Jedoch ist auch ein Vermischen mit flüssigem Dehnstoff wegen der relativ geringen Unterschiede bezüglich der Dichte vorteilhaft.

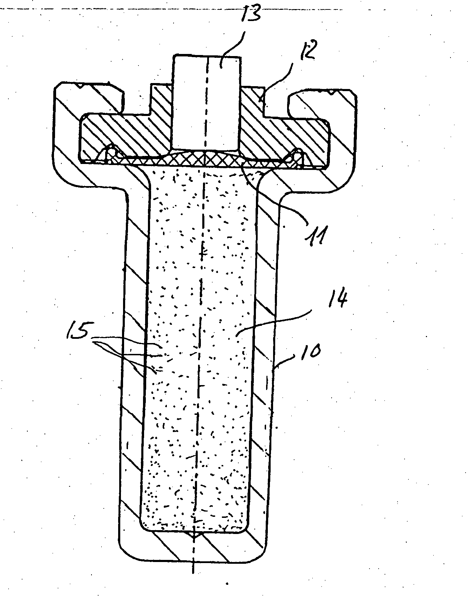

Weitere Merkmale und Vorteile der Erfindung ergeben sich aus der nachfolgenden Beschreibung des in der Zeichnung dargestellten Ausführungsbeispiels und den Unteransprüchen.

Die Zeichnung zeigt einen Axialschnitt durch ein thermostatisches Arbeitselement, dessen Dehnstoff ein Wachs ist, dem als Zusatzstoff expandiertes Graphit zugemischt ist.

Das thermostatische Arbeitselement besitzt ein rohrförmiges, einseitig geschlossenes metallisches Gehäuse 10, dessen offener Rand mittels einer gummielastischen Membrane 11 verschlossen ist. Die Membrane ist mittels eines Führungsteils 12 eingespannt, das mittels eines Bördelrandes des Gehäuses 10 gehalten ist. Das Führungsteil 12 führt einen Arbeitskolben, der auf der Membran 11 abgestützt ist.

In das Gehäuse 10 ist ein Dehnstoff, eine Wachsmischung, möglichst ohne Gas- oder Lufteinschlüsse eingefüllt. Der Dehnstoff 14 ändert sein Volumen in Abhängigkeit der Temperatur, wobei insbesondere bei und nach der Aggregatszustandsänderung eine weitgehend lineare Kennlinie vorhanden ist, mit der der Arbeitskolben 13 aus dem Gehäuse ausgetrieben wird.

Um die Reaktionszeit zu verkürzen, mit welcher der Dehnstoff 14 auf Temperaturänderungen anspricht, ist dem Dehnstoff 14 expandiertes Graphit 15 zugegeben worden.

Abgebautes Graphit hat meist eine flockenförmige Gestalt, wobei die Flockengröße in der Größenordnung von 1 mm liegt. Durch Expandieren wird das spezifische Volumen des Graphits auf das über 300-fache vergrößert. Die expandierten Graphitflocken werden mit dem Dehnstoff (Wachs) vermischt, bevor der Dehnstoff in das Gehäuse 10 möglichst ohne Luft- oder Gaseinschlüsse eingefüllt wird. Es ist zweckmäßig, den Dehnstoff während des Vermischens auf eine Temperatur abzukühlen, die etwa 30° bis etwa 40° unter seiner Schmelztemperatur liegt. Zweckmäßig wird der Dehnstoff vor oder nach dem Vermischen über seine Schmelztemperatur erwärmt, damit er teilweise von dem expandierten Graphit aufgesaugt wird. Um eine wesentliche Verbesserung der Ansprechzeit oder Reaktionszeit zu erhalten, genügt es, dass das flockenförmige, expandierte Graphit einen Gewichtsanteil von etwa 25% hat.

Um expandiertes Graphit in Pulverform zu erhalten, werden die expandierten Graphitflocken zunächst zu einer Folie gepresst (gewalzt), die dann zu Pulver gemahlen wird. Zweckmäßigerweise werden Korngrößen von weniger als 1 mm und insbesondere weniger als 500 µ dem Dehnstoff zugegeben. Das Vermischen kann bei Temperaturen erfolgen, die geringfügig unter der Schmelztemperatur des Dehnstoffes liegen, die üblicherweise in der Größenordnung zwischen 20° und 50° sein wird. Das Vermischen des Pulvers aus expandiertem Graphit mit dem Dehnstoff kann deshalb nahezu bei Raumtemperatur durchgeführt werden, insbesondere in klimatisierten Räumen. Dieses Mischen kann beispielsweise in einem Extrudiermischer durchgeführt werden, dem Wachs und pulverförmiges expandiertes Graphit zugegeben werden. Dabei ist es auch möglich, Formkörper zu erzeugen, die dem Innenraum des Gehäuses 10 entsprechen, und die in das Gehäuse eingesteckt werden.

Das in der Zeichnung dargestellte thermostatische Arbeitselement ist nur als ein Beispiel zu verstehen. Die Erfindung ist für jede Bauart von thermostatischen Arbeitselementen geeignet, z.B. für Arbeitselemente, bei denen der Arbeitskolben in eine sackförmige Membrane ragt oder für Elemente mit Gummieinsatz.

## Patentansprüche

1. Thermostatisches Arbeitselement mit einem Gehäuse, das einen mit Zusatzstoff vermischten Dehnstoff enthält, dessen Volumen temperaturabhängig ist und der als Mittel zum Austreiben eines Arbeitskolbens aus dem Gehäuse dient, **dadurch gekennzeichnet, dass** dem Dehnstoff (14) expandiertes Graphit (15) zugegeben ist.

2. Thermostatisches Arbeitselement, **dadurch gekennzeichnet, dass** expandierte Graphitflocken dem Dehnstoff (14) zugegeben sind.

3. Thermostatisches Arbeitselement nach Anspruch 2, **dadurch gekennzeichnet, dass** die expandierten Graphitflocken einen Gewichtsanteil von etwa 25% haben.

4. Thermostatisches Arbeitselement nach Anspruch 1, **dadurch gekennzeichnet, dass** dem Dehnstoff (14) ein Pulver aus expandiertem Graphit (15) zugegeben ist.

5. Thermostatisches Arbeitselement nach Anspruch 4, **dadurch gekennzeichnet, dass** das Pulver einen Gewichtsanteil von etwa 50% aufweist.

6. Thermostatisches Arbeitselement nach Anspruch 4 oder 5, **dadurch gekennzeichnet, dass** das Pulver aus Partikeln mit einer Korngröße von weniger als 1 mm und vorzugsweise weniger als 500 µ besteht.

7. Verfahren zum Herstellen eines thermostatischen Arbeitselementes, das ein Gehäuse aufweist, in das ein Dehnstoff und ein Zusatzstoff eingegeben werden, **dadurch gekennzeichnet, dass** dem Dehnstoff expandiertes Graphit zugemischt wird, wobei bei der Verarbeitung die Temperatur des Dehnstoffes unter seiner Schmelztemperatur gehalten wird.

8. Verfahren nach Anspruch 7, **dadurch gekennzeichnet, dass** expandierte Graphitflocken mit dem Dehnstoff verarbeitet werden, wenn der Dehnstoff eine Temperatur von etwa 30° bis etwa 40° unter seinem Schmelzpunkt aufweist.

9. Verfahren nach Anspruch 7, **dadurch gekennzeichnet, dass** expandiertes Graphit als Pulver mit dem Dehnstoff vermischt wird.

10. Verfahren nach einem der Ansprüche 7 bis 9, **dadurch gekennzeichnet, dass** in das Gehäuse einsetzbare Körper aus Dehnstoff und untergemischtem expandiertem Graphit hergestellt werden.

## Claims

1. A thermostatic working element with a housing, which contains an expansion material mixed with additive, of which the volume is dependent on temperature and which serves as a means for driving a working piston out from the housing, **characterised in that** expanded graphite (15) is added to the expansion material (14).

2. A thermostatic working element, **characterised in that** expanded graphite flakes are added to the expansion material (14).

3. The thermostatic working element according to claim 2, **characterised in that** the expanded graphite flakes have a proportion by weight of approximately 25 %.

4. The thermostatic working element according to claim 1, **characterised in that** a powder formed from expanded graphite (15) is added to the expansion material (14).

5. The thermostatic working element according to claim 4, **characterised in that** the powder has a proportion by weight of approximately 50 %.

6. The thermostatic element according to claim 4 or 5, **characterised in that** the powder consists of particles having a particle size of less than 1 mm and preferably less than 500 µm.

7. A method for producing a thermostatic working element, which has a housing into which an expansion material and an additive are introduced, **characterised in that** expanded graphite is admixed to the expansion material, wherein, during the processing, the temperature of the expansion material is kept below the melting point thereof.

8. The method according to claim 7, **characterised in that** expanded graphite flakes are processed with the expansion material when the expansion material has a temperature from approximately 30° to approximately 40° below the melting point thereof.

9. The method according to claim 7, **characterised in that** expanded graphite is mixed in the form of powder with the expansion material.

10. The method according to one of claims 7 to 9, **characterised in that** bodies that can be inserted into the housing are produced from expansion material and under-mixed, expanded graphite.

## Revendications

1. Actionneur thermostatique comprenant un boîtier qui contient une matière dilatable mélangée avec un additif, matière dilatable dont le volume est fonction de la température et qui sert de moyen pour chasser hors du boîtier, un piston de travail, **caractérisé en ce que** du graphite expansé (15) est ajouté à la matière dilatable (14).

2. Actionneur thermostatique, **caractérisé en ce que** des paillettes de graphite expansé sont ajoutées à la matière dilatable (14).

3. Actionneur thermostatique selon la revendication 2, **caractérisé en ce que** les paillettes de graphite expansé ont un pourcentage en poids à peu près de 25 %.

4. Actionneur thermostatique selon la revendication 1, **caractérisé en ce qu'**une poudre de graphite expansé (15) est ajoutée à la matière dilatable (14).

5. Actionneur thermostatique selon la revendication 4, **caractérisé en ce que** la poudre présente un pourcentage en poids à peu près de 50 %.

6. Actionneur thermostatique selon la revendication 4 ou 5, **caractérisé en ce que** la poudre se compose de particules ayant une granulométrie de moins de 1 mm et, de préférence, de moins de 500 µ.

7. Procédé de fabrication d'un actionneur thermostatique qui présente un boîtier dans lequel sont introduits une matière dilatable et un additif, **caractérisé en ce que** du graphite expansé est ajouté et mélangé à la matière dilatable où, au cours du traitement, la température de la matière dilatable est maintenue au-dessous de sa température de fusion.

8. Procédé selon la revendication 7, **caractérisé en ce que** des paillettes de graphite expansé sont traitées avec la matière dilatable quand la matière dilatable présente une température de 30° environ à 40° environ au-dessous de son point de fusion.

9. Procédé selon la revendication 7, **caractérisé en ce que** du graphite expansé, en poudre, est mélangé avec la matière dilatable.

10. Procédé selon l'une quelconque des revendications 7 à 9, **caractérisé en ce que** des corps pouvant être introduits dans le boîtier sont fabriqués à partir d'une matière dilatable et de graphite expansé mélangé à celle-ci.
